(19) Europäisches Patentamt
European Patent Office
Office européen des brevets

(11) Publication number: **0 025 644**
**B1**

(12) # EUROPEAN PATENT SPECIFICATION

(45) Date of publication of patent specification: **28.12.83**

(51) Int. Cl.³: **C 25 B 13/08**, C 08 J 5/22, C 08 J 7/12, C 25 B 1/46

(21) Application number: **80302811.7**

(22) Date of filing: **14.08.80**

(54) **Fluorinated polymer cation exchange membrane for electrolysis, process for its preparation and process for electrolysing an aqueous solution of an alkali metal chloride.**

(30) Priority: **14.08.79 JP 102750/79**

(43) Date of publication of application:
**25.03.81 Bulletin 81/12**

(45) Publication of the grant of the patent:
**28.12.83 Bulletin 83/52**

(84) Designated Contracting States:
**DE FR GB IT**

(56) References cited:
**DE - A - 2 904 647**
**FR - A - 2 388 061**
**GB - A - 1 501 819**
**GB - A - 1 518 387**

(73) Proprietor: **ASAHI GLASS COMPANY LTD.**
**No. 1-2, Marunouchi 2-chome**
**Chiyoda-ku, Tokyo (JP)**

(72) Inventor: **Tatsuro, Asawa**
**No. 472, Hiyoshihoncho**
**Kohkoku-ku Yokohama-shi Kanagawa-ken (JP)**
Inventor: **Masaaki, Yamabe**
**2-3-13, Minami Tsukushino**
**Machida-shi Tokyo (JP)**
Inventor: **Haruhisa Miyake**
**No. 62, Kuritaya Kanagawa-ku**
**Yokohama-shi Kanagawa-ken (JP)**

(74) Representative: **Warden, John Christopher et al,**
**R.G.C. Jenkins & Co. 12-15, Fetter Lane**
**London EC4A 1PL (GB)**

**EP 0 025 644 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Fluorinated polymer cation exchange membrane for electrolysis, process for its preparation and process for electrolysing an aqueous solution of an alkali metal chloride

The present invention relates to a cation exchange membrane made of a fluorinated polymer for electrolysis. The membrane of the invention imparts high current efficiency and low electrical resistance, particularly in the electrolysis of an aqueous solution of an alkali metal chloride.

It has been proposed to use as a membrane for an electrolysis of an alkali metal chloride, a cation exchange membrane of a fluorinated copolymer produced by copolymerizing a fluorinated olefin such as $CF_2{=}CF_2$ and a fluorovinyl either having a sulfonic acid group or a functional group convertible to sulfonic group, such as

$$CF_2{=}CFOCF_2CF(CF_3)OCF_2CF_2SO_2F$$

and hydrolyzing the fluorinated copolymer to convert $—SO_2F$ groups into $—SO_3H$ groups, (U.S. Patent 4,025,405).

When such a cation exchange membrane is used as a membrane for electrolysis of an alkali metal chloride, excellent acid resistance, chlorine resistance and alkali resistance are found, but it is difficult to maintain high current efficiency as the concentration of the alkali metal hydroxide product increases.

It has been proposed, in order to overcome this disadvantage, to improve the characteristics of the membrane by converting the sulfonic acid ion exchange groups of the membrane into carboxylic acid groups by treating with a reducing agent or an oxidizing agent. (U.S. Patent 4,151,053 and U.S. Patent 4,200,711). The resulting modified cation exchange membrane has an ion exchange capacity of only up to about 0.9 meq./g polymer because of the high polarity of the sulfonic acid group. It is difficult to obtain a cation exchange membrane having greater ion exchange capacity.

When sulfonic acid groups which provide small ion exchange capacity are converted into carboxylic acid groups, electrical resistance is increased. Therefore, only a thin surface layer on the cathode side should be converted into carboxylic acid groups. When carboxylic acid groups are in prolonged contact with an aqueous solution of an alkali metal hydroxide of high concentration and at high temperature, the carboxylic acid groups are gradually decomposed. When the modified cation exchange membrane is continuously used, its properties deteriorate. It is necessary to treat the membrane again so as to convert more sulfonic acid groups into carboxylic acid groups. In order to convert sulfonic acid groups into carboxylic acid groups only in a thin layer of the membrane, so as to prevent the increase in the electrical resistance, it is necessary to carry out the convention with great care, and the process is difficult to control on an industrial scale.

On the other hand, it has been proposed to use a cation exchange membrane of a fluorinated copolymer of a fluorinated olefin such as $CF_2{=}CF_2$ and a fluorovinyl either having a carboxylic acid groups or a functional group convertible to a carboxylic acid group, such as

$$CF_2{=}CFO(CF_2)_nCOOM$$

wherein n is 1 to 12 and M represents hydrogen atom or an alkali metal atom, (U.S. Patent 4,065,366 and U.S. Patent 4,202,743). When such a cation exchange membrane is used, the degree of dissociation of carboxylic acid groups is lowered so that the cell voltage rises during operation at low pH with an addition of an acid such as hydrochloric acid so as to control a concentration of oxygen in chlorine gas formed in an anode compartment.

DE—A—2904647 and GB—A—2014590 disclose in one Example a process for producing a fluorinated polymer cation exchange membrane wherein perfluoroethylene is copolymerized with a perfluorovinyl ether having a fluorosulphonyl group to form a membrane having a thickness of 0.13 mm. This is reacted with methylamine on one side to a depth of 0.04 mm, then hydrolysed and converted to the H form to give a two-layer membrane of which about two thirds has sulphonic acid ion-exchange groups and one third has carboxylic acid groups.

It is an object of the present invention to provide a fluorinated polymer cation exchange membrane for electrolysis imparts high current efficiency and low electrical resistance in the electrolysis and eliminate the need for retreatment to regenerate carboxylic acid groups.

The present invention provides a fluorinated polymer cation exchange membrane for electrolysis, having a structure comprising a copolymer of a fluorinated olefin and a fluorovinyl compound having the formula

$$CF_2{=}CX—(OCF_2CFY)_l—(O)_m—(CFY')_n—COOM$$

wherein X represents —F or $—CF_3$; Y and Y' respectively represent —F or a $C_1—C_{10}$ perfluoroalkyl group; l is 0 to 3; m is 0 or 1; n is 0 to 12 and M represents a hydrogen atom or an alkali metal atom, characterized in that said cation exchange membrane has a surface layer of a side thereof modified with $—SO_3M$ groups formed by converting —COOM groups, M being as defined above, said surface layer extending to not more than 1/3 of the total thickness of the membrane.

The membrane of the present invention is easily produced and can be used at low pH in an anode compartment.

The fluorinated copolymer used in the membrane of the invention can be a polymer having a large ion exchange capacity often up to 2.0 meq./g dry polymer, though it is difficult to achieve this with a conventional sulfonic acid-type fluorinated copolymer. A cation exchange membrane of a copolymer having such a high ion exchange capacity has a low electrical resistance. When some of the carboxylic acid groups on the anode side are converted into sulfonic acid groups, the electrical resistance can be further lowered. Since the electrical resistance is lowered by the conversion, it is unnecessary to control precisely the degree of conversion into sulfonic acid groups in the surface layer. The control of the conversion is easy and no retreatment is needed. Moreover, the surface layer of the membrane on the anode side is provided with sulfonic acid groups, whereby the electric resistance of the membrane and the cell voltage do not increase even where an acid is added to the anode compartment to give a low pH.

The cation exchange membrane of the present invention comprises a copolymer of the fluorinated olefin and the fluorovinyl compound defined above having carboxylic acid groups. Another copolymer can be used in forming the membrane provided it gives the required structure in the electrolysis of an aqueous solution of an alkali metal chloride. It is preferable to use a copolymer of the fluorinated olefin and a fluorovinyl compound having carboxylic acid or a functional group convertible into a carboxylic acid group.

The fluorovinyl compounds have the formula

$$CF_2=CX-(OCF_2CFY)_l-(O)_m-(CFY')_n-A$$

wherein X, Y, Y′, l, m and n are as defined above and A represents —COOM or a functional group which is convertible to —COOM by hydrolysis or neutralization, such as —CN, —COF, $-COOR_1$, $-COOM_1$ or

$$-COONR_2R_3$$

$R_1$ represents a $C_{1-10}$ alkyl group; $R_2$ and $R_3$ respectively represent —H or $R_1$; $M_1$ represents a quaternary ammonium group.

From the viewpoints of the property and availability, it is preferable to use the fluorovinyl compound having the above-mentioned formula wherein X is —F; Y is —F or $-CF_3$; Y′ is —F; l is 0 to 1; m is 0 to 1; n is 0 to 8; A is —COF or $-COOR_1$ from the viewpoint of the copolymerization reaction. It is preferable to use the fluorovinyl compound having the following formula

$$CF_2=CF-(OCF_2\underset{\underset{CF_3}{|}}{CF})_p-O-(CF_2)_q-COOM$$

wherein p is 0 or 1; q is 1 to 5 and M is defined above.

Typical fluorovinyl compounds include

$CF_2=CFO(CF_2)_{1-8}COOCH_3$,
$CF_2=CFO(CF_2)_{1-8}COOC_2H_5$,
$CF_2=CF(CF_2)_{1-8}COF$,
$CF_2=CFOCF_2CF(CF_3)OCF_2CF_2CF_2COOCH_3$

The fluorinated olefins are preferably compounds having the formula

$$CF_2=CZZ'$$

wherein Z and Z′ respectively represent —F, —Cl, —H or $-CF_3$. It is preferable to use a tetrafluoroethylene, trifluorochloroethylene, hexafluoropropylene, trifluoroethylene, vinylidene fluoride and vinyl fluoride. It is optimum to use a perfluoroethylene such as tetrafluoroethylene.

In the process of the invention, it is possible to use two or more types of the functional fluorovinyl monomers and the fluorinated olefins, respectively.

It is also possible to add one or more other monomers such as a fluorovinyl ether having the formula $CF_2=CFOR_f$ wherein $R_f$ represents a $C_{1-10}$ perfluoroalkyl group; or a divinyl monomer e.g.

$$CF_2=CF \quad CF=CF_2$$

and

$$CF_2=CFO(CF_2)_{1-4}OCF=CF_2$$

The content of the specific fluorovinyl component is important since it greatly effects the characteristics of the cation exchange membrane, and it is preferably selected so as to give an ion exchange capacity of 0.9 to 4.0 meq./g dry polymer more especially 1.1 to 2.0 meq./g dry polymer. When the ion exchange capacity is too small, the ion exchange function is too low and the electrical resistance is too high. On the other hand, when it is too high, the mechanical strength of the cation exchange membrane is not high enough and the water content is too large, giving inferior electrical characteristics such as current efficiency.

The copolymerization of the fluorinated olefin and the specific fluorovinyl compound can be carried out with or without an inert organic solvent or an aqueous medium in the presence of a polymerization initiator such as a peroxy compound or, an azo compound or with irradiation of ultraviolet rays or an ionized ratioactive rays by known processes such as the process disclosed in U.S. Patents: 4,116,888 and 4,138,373. The polymerization can be a bulk polymerization, a solution polymerization, a suspension polymerization and an emulsion polymerization.

In the production of the fluorinated copolymer of the present invention, one or more of the fluorovinyl compounds and one or more of the fluorinated olefins and, if desired, one or more other comonomers can be copolymerized.

The fluorinated copolymer used for the membrane of the present invention preferably has $T_Q$ (temperature for a melt volumetric flow rate of 100 $mm^3$/second) of 130 to 350°C, especially 160 to 300°C ($T_Q$ relates to the molecular weight).

The fluorinated copolymer can be formed into a cation exchange membrane by the known processes such as press-molding; roll-molding; extrusion-molding; solution-spreading; dispersion-molding and powder-molding.

The membrane should be non-porous and dense so as to have high ion selectivity as an cation exchange membrane. The water permeability of the membrane is preferably less than 100 ml/hr/$m^2$ and especially less than 10 ml/hr/$m^2$ under a pressure of 1 $mH_2O$ (60°C; pH=1.00; 4N-NaCl). The thickness of the membrane is preferably in a range of 10 to 500 $\mu$m, especially 50 to 300 $\mu$m.

When the fluorinated copolymer has no carboxylic acid groups but has functional groups convertible into carboxylic acid groups, the functional groups are converted into carboxylic acid groups by a suitable treatment before or after it is formed into a membrane. For example, when the functional groups are acid ester groups, acid amide groups, or quaternary ammonium salt groups, the copolymer can be hydrolyzed or neutralized in an alcoholic solution of an acid or a base to convert the functional groups into carboxylic acid groups.

When the copolymer is formed into the cation exchange membrane, it is possible to blend in an olefin polymer such as polyethylene or polypropylene or a fluorinated polymer such as polytetrafluoroethylene or a copolymer of ethylene and tetrafluoroethylene. It is also possible to support the fluorinated polymer on a supporter such as a woven fabric net, a nonwoven fabric or a porous film made of the olefin polymer or fluorinated polymer.

The process used for converting carboxylic acid groups in the surface layer of the membrane or the anode side into sulfonic acid groups is not critical and can be selected from various processes. For example, the following reactions can be carried out for a cation exchange membrane made of a copolymer having groups of formula $-(CF_2)_2COOM'$ (M' represents a lower alkyl group) as branched chains:

a) The ester groups of the copolymer are hydrolyzed in an aqueous solution of a base to form side chains having the formula $-(CF_2)_2COOM''$ (M" represents an alkali metal atom) and then further converted into $-CF{=}CF_2$ groups by a decarbonation reaction and then further converted into sulfonic acid groups by reacting with sulfuryl fluoride and hydrolyzing.

b) The $-(CF_2)_2COOM''$ groups are converted into $-CF_2CF_2H$ groups by treating the copolymer in a conc. alkaline metal hydroxide solution at high temperature and then further converted into sulfonic acid groups by reacting with chlorosulfonic acid as well as the complex of sulfur trioxide with pyridine or dioxane.

c) The $-(CF_2)_2COOM''$ groups of the copolymer are converted into $-(CF_2)_2COOH$ groups and then converted into $-(CF_2)_2I$ groups by reacting with iodine in the presence of a peroxide, then converted into $-(CF_2)_2MgBr$ or $-(CF_2)_2Li$ groups by reacting with Grignard reagent or alkyl lithium, respectively and converted into $-(CF_2)_2SO_2Cl$ by reacting with sulfonyl chloride. $-(CF_2)_2I$ groups can be also converted directly into $-(CF_2)_2SO_2Cl$ by sulfur trioxide and chloride in the presence of zinc, $-(CF_2)_2SO_2Cl$ groups are further converted into sulfonic acid groups by hydrolyzing them.

The surface layer of the membrane on the anode side in which the $-COOM$ groups are converted into $-SO_3M$ groups can be a thin layer having a depth of preferably at least 1.0 $\mu$m, especially in a range of 5.0 to 100 $\mu$m and can constitute up to 1/3 of the thickness of the membrane while maintaining the improved electrochemical properties.

The process used for treating only the one surface can be one of several processes. For example, the other surface can be protected by a suitable film before the treatment or two sheets of the membranes can be placed in back to back relationship and sealed at their periphery before the treatment.

The resulting cation exchange membrane can be used for electrolysis of an aqueous solution of an alkali metal chloride to produce an alkali metal hydroxide and chlorine. It is also possible to use it in an electrolysis of an alkali metal carbonate or sulfate or of water. The system and apparatus used for the electrolysis can be any suitable electrolytic system such as SPE (Solid Polymer Electrolyte) in which the membrane is brought into contact with the electrodes.

A further understanding of the invention can be obtained by reference to the following examples which are provided herein for the purpose of illustration only.

Example 1

A copolymer having an ion exchange capacity of 1.47 meq./g polymer and $T_Q$ of 235°C was produced by copolymerizing $CF_2{=}CF_2$ and

$$CF_2{=}CFO(CF_2)_3COOCH_3$$

in a bulk polymerization at 65°C with azobisisobutyronitrile as an initiator. The copolymer was fabricated to form a film having a thickness of 300 $\mu$m by a press-molding, at 235°C. Two sheets of the film were overlapped and peripheral parts were sealed with a packing made of polytetrafluoroethylene and the films were dipped into 25 wt% aqueous solution of sodium hydroxide at 90°C for 1 hr. The films were washed with water and heat-

treated in an electric oven at 250°C. The films were dipped into a tetraglyme solution of cesium fluoride at 70°C for 5 hr to form sulfuryl fluoride. The films were taken up and the sealed part was opened to separate them into two sheets of membrane. Each membrane was dipped into 25 wt% aqueous solution of sodium hydroxide at 90°C for 16 hr. Both surfaces of the membrane were observed by a surface infrared spectrography. On the treated surface, the absorption of $-SO_3Na$ group at 1060 $cm^{-1}$ was found and on the non-treated surface, the absorption of $-COONa$ group at 1680 $cm^{-1}$ was found.

According to a measurement of XMA for sulfur in the sectional direction of the membrane, it was confirmed that the surface layer of $SO_3Na$ groups reached to a depth of 10 $\mu m$ from the surface.

A two compartment cell was assembled with the cation exchange membrane having the surface layer of $-SO_3Na$ groups in an anode side to use it for an electrolysis.

A ruthenium oxide coated titanium electrode was used as an anode and a stainless steel electrode was used as a cathode and a distance between the electrodes was set in 2.2 cm and an effective area of the membrane was 25 $cm^2$. An electrolysis of an aqueous solution of sodium chloride was carried out in the following condition.

4N-NaCl aqueous solution was charged into an anode compartment and 8N-NaOH aqueous solution was charged into a cathode compartment. An electrolysis was carried out by feeding 4N-NaCl aqueous solution into the anode compartment at a rate of 150 cc/hr and feeding 0.1N-NaOH aqueous solution into the cathode compartment at a rate of 2.7 cc/hr, and a current density of 20 $A/dm^2$, at 92°C under maintaining pH of the anolyte to 1.2 by adding hydrochloric acid into the anode compartment so as to decrease a concentration of oxygen in chlorine gas to less than 1.5%.

The aqueous solution of sodium chloride was overflowed from the anode compartment and the aqueous solution of sodium hydroxide overflowed from the cathode compartment was collected. A current efficiency was measured by the amount of the resulting sodium hydroxide.

As a result of the electrolysis, 40 wt% of sodium hydroxide was obtained at a current efficiency of 94% and a cell voltage of 3.5 V. The membrane maintained stable characteristics in the operation for long time.

On the other hand, the same electrolysis was carried out under the addition of hydrochloric acid into the anode compartment by using the non-treated membrane in which the conversion of the surface layer into $-SO_3Na$ groups in the anode side is not made. The cell voltage increased to 4.3 V.

Example 2

A film having a thickness of 300 $\mu m$ was prepared by press-molding the fluorinated copolymer by the process of Example 1. Two sheets of the film were overlapped and the peripheral parts were sealed and dipped into 50 wt% of aqueous solution of sodium hydroxide at 120°C for 40 hr. The films were washed with water and treated with chlorosulfonic acid. The two sheets of the treated film were separated into two membranes. Each membrane was treated in 25 wt% aqueous solution of sodium hydroxide at 90°C for 16 hr.

According to the surface infrared spectrography, it was found that one surface layer of the membrane had $-SO_3Na$ group and the other surface layer has $-COONa$ groups.

According to the observation of XMA for sulfur, a depth of the surface layer having $-SO_3Na$ groups was 25 $\mu m$.

In accordance with the process of Example 1 except using the resulting membrane, an electrolysis was carried out by adding hydrochloric acid into the anode compartment so as to maintain a concentration of oxygen to less than 1.5%. The pH in the anode compartment was 1.0.

As a result of the electrolysis, 40 wt% aqueous solution of sodium hydroxide was produced in stable for a long time at a cell voltage of 3.5 V. When a non-treated cation exchange membrane in which a conversion to $-SO_3Na$ groups is not made, was used in the same electrolysis, a cell voltage was 4.6 V. The same reaction procedure as described above was applied for a film prepared by press-molding the fluorinated copolymer of $CF_2{=}CF_2$ and

$$CF_2{=}CFOCF_2COOCH_3$$

which was polymerized in bulk at 45°C using diisopropyl peroxydicarbonate as an initiator and had an ion exchange capacity of 1.45 meq./g and $T_Q$ of 230°C. From the surface infrared and XMA measurements, it was confirmed that one surface of the membrane had $-SO_3Na$ groups and their depth was 20 $\mu m$.

Example 3

A copolymer having an ion exchange capacity of 1.37 meq./g polymer and $T_Q$ of 210°C was produced by copolymerizing $CF_2{=}CF_2$ and

$$CF_2{=}CFO(CF_2)_3COOCH_3$$

and

$$CF_2{=}CFOCF_2\underset{\displaystyle CF_3}{\underset{|}{C}}FO(CF_2)_3COOCH_3$$

(ratio of 80:20) in a bulk polymerization at 65°C with azobisisobutyronitrile as an initiator. The copolymer was fabricated to form a film having a thickness of 300 $\mu m$ by a press-molding at 210°C. Two sheets of the film were overlapped and peripheral parts were sealed with a packing made of polytetrafluoroethylene

and the films were dipped into 25 wt% aqueous solution of sodium hydroxide at 90°C for 1 hr and then dipped into conc. HCl at 90°C for 1 hr. The films were washed with water and dried and dipped into 1,2-difluoro-1,1,2,2-tetrachloroethane at 90°C for 1 hr to highly swell the surface. After cooling it, iodine and benzoylperoxide were added and the reaction system was kept at 90°C for 5 hr. The films were washed with methanol and dried.

According to the surface infrared spectrography, it was confirmed that carboxylic acid groups were converted into $CF_2I$ groups by the absorption at 760 $cm^{-1}$.

The films were dipped into a tetrahydrofuran solution of $C_6H_5MgBr$ at −70°C for 5 hr and then at −40°C for 2 hr. The solution was further cooled at −70°C and admixed with excess of $SO_2Cl_2$ and was heated from −70°C to the ambient temperature during 24 hours. The films were taken up and washed with a dilute hydrochloric acid and with water and were separated into two membranes. Each membrane was dipped into 25 wt% aqueous solution of sodium hydroxide at 90°C for 16 hr. According to the surface infrared spectrography of the membrane, it was confirmed that the treated surface layer had $—SO_3Na$ groups and the other surface layer had —COONa groups.

## Claims

1. A fluorinated polymer cation exchange membrane for electrolysis, having a structure comprising a copolymer of a fluorinated olefin and a fluorovinyl compound having the formula

$$CF_2{=}CX{—}(OCF_2CFY)_l{—}(O)_m{—}(CFY')_n{—}COOM$$

wherein X represents —F or $—CF_3$; Y and Y′ respectively represent —F or a $C_1—C_{10}$ perfluoroalkyl group; l is 0 to 3; m is 0 or 1; n is 0 to 12 and M represents a hydrogen atom or an alkali metal atom, characterized in that said cation exchange membrane has a surface layer of a side thereof modified with $—SO_3M$ groups formed by converting —COOM groups, M being as defined above, said surface layer extending to not more than 1/3 of the total thickness of the membrane.

2. A cation exchange membrane according to Claim 1 characterized in that said fluorovinyl compound is a compound having the formula

$$CF_2{=}CF{—}(OCF_2\underset{\displaystyle CF_3}{\underset{|}{CF}})_p{—}O(CF_2)_q{—}COOM$$

wherein p is 0 or 1; q is 1 to 5 and M represents a hydrogen atom or an alkali metal atom.

3. A cation exchange membrane according to Claim 1 or Claim 2 characterized in that said cation exchange membrane has an anode side with a modified surface layer having $—OCF_2SO_3M$ groups and a cathode side with a surface layer having $—OCF_2COOM$ groups.

4. A cation exchange membrane according to any preceding claim characterized in that the surface layer on said anode side has $—SO_3M$ groups as ion-exchange groups to a depth of at least 1.0 μm.

5. A cation exchange membrane according to any preceding claim characterised in that the ion exchange capacity of the $—SO_3M$ groups in said modified surface layer is in a range of 1.0 to 4.0 meq./g dry polymer.

6. A process for producing a fluorinated polymer cation exchange membrane according to any one of Claims 1—5 characterized in that a membrane is formed from a copolymer of a fluorinated olefin and a fluorovinyl compound having the formula:

$$CF_2{=}CX{—}(OCF_2CFY)_l{—}(O)_m{—}(CFY')_n{—}COOM$$

wherein X represents —F or $—CF_3$; Y and Y′ respectively represent —F or a $C_1—C_{10}$ perfluoroalkyl group; l is 0 to 3; m is 0 or 1; n is 0 to 12 and M represents a hydrogen atom or an alkali atom and groups of formula —COOM on one side surface of the membrane are converted to groups of formula $—SO_3M$, wherein M is as defined above.

7. A process according to Claim 6, characterised in that said —COOM groups are converted into $—SO_3M$ groups through intermediate groups of formula $—CF{=}CF_2$, $—CF_2H$ or $—CF_2I$.

8. A process for electrolysing an aqueous solution of an alkali metal chloride to produce an alkali metal hydroxide and chlorine, characterised in that there is used as a cation exchange membrane according to any one of Claims 1 to 5, or made by a process according to Claim 7 or Claim 8, with said modified surface layer facing the anode.

## Patentansprüche

1. Kationenaustauschermembran für Elektrolysezwecke aus einem fluorierten Polymeren mit einer Struktur, welche ein Copolymerisat aus einem fluorierten Olefin und einer Fluorvinylverbindung der Formel

$$CF_2{=}CX{—}(OCF_2CFY)_l{—}(O)_m{—}(CFY')_n{—}COOM$$

umfaßt, wobei X für —F oder $—CF_3$ steht; Y und Y′ jeweils für —F oder eine $C_1—C_{10}$-Perfluoralkylgruppe stehen, 1 für 0 bis 3 steht; m für 0 oder 1 steht; n für 0 bis 12 steht und M ein Wasserstoffatom oder ein Alkalimetallatombedeutet, dadurch gekennzeichnet, daß die Kationenaustauschermembran auf einer ihrer Seiten eine Oberflächenschicht aufweist, welche mit $—SO_3M$-Gruppen modifiziert ist, die durch Umwandlung von —COOM-Gruppen gebildet wurden, wobei M die oben angegebene Bedeutung hat und wobei die Oberflächenschicht sich auf nicht mehr als 1/3 der Gesamtdicke der Membran erstreckt.

2. Kationenaustauschermembran nach Anspruch 1, dadurch gekennzeichnet, daß die Fluorvinylverbindung eine Verbindung der Formel

$$CF_2{=}CF{-}(OCF_2\underset{\displaystyle CF_3}{\underset{|}{C}}F)_p{-}O(CF_2)_q{-}COOM$$

ist, wobei p für 0 oder 1 steht; q für 1 bis 5 steht und M ein Wasserstoffatom oder ein Alkalimetallatom bedeutet.

3. Kationenaustauschermembran nach Anspruch 1 oder 2, dadurch gekennzeichnnet, daß die Kationenaustauschermembran eine Anodenseite mit einer modifizierten Oberflächenschicht mit $-OCF_2SO_3M$-Gruppen und eine Kathodenseite mit einer Oberflächenschicht mit $-OCF_2COOM$-Gruppen aufweist.

4. Kationenaustauschermembran nach einem der vorstehenden Ansprüche, dadurch gekennzeichnet, daß die Oberflächenschicht auf der Anodenseite $-SO_3M$-Gruppen als Ionenaustauschergruppen bis zu einer Teife von wenigstens 1,0 $\mu$m aufweist.

5. Kationenaustauschermembran nach einem der vorstehenden Ansprüche, dadurch gekennzeichnet, daß die Ionenaustauschkapazität der $-SO_3M$-Gruppen in der modifizierten Oberblächenschicht in einem Bereich von 1,0 bis 4,0 mäq./g trockenes Polymer liegt.

6. Verfahren zur Herstellung einer Kationenaustauschermembran aus einem fluorierten Polymeren nach einem der Ansprüche 1—5, dadurch gekennzeichnet, daß man eine Membran bildet aus einem Copolymerisat eines fluorierten Olefins und eine Fluorvinylverbindung der Formel

$$CF_2{=}CX{-}(OCF_2CFY)_l{-}(O)_m{-}(CFY')_n{-}COOM$$

wobei X für $-F$ oder $-CF_3$ steht; Y und Y' jeweils für $-F$ oder eine $C_1-C_{10}$ Perfluoralkylgruppe stehen; 1 für 0 bis 3 steht; m für 0 oder 1 steht; n für 0 bis 12 steht und M ein Wasserstoffatom oder ein Alkaliatom bedeutet und Gruppen der Formel $-COOM$ auf einer Oberflächenseite der Membran in Gruppen der Formel $-SO_3M$ umwandelt, wobei M die oben angegebene Bedeutung hat.

7. Verfahren nach Anspruch 6, dadurch gekennzeichnet, daß die $-COOM$-Gruppen über Zwischengruppen der Formel $-CF{=}CF_2$, $-CF_2H$ oder $-CF_2I$ in $-SO_3M$-Gruppen ungewandelt werden.

8. Verfahren zur Elektrolyse einer wässrigen Lösung eines Alkalimetallchlorids zur Herstellung eines Alkalimetallhydroxids und Chlor, dadurch gekennzeichnet, daß man eine Kationenaustauschermembran nach einem der Ansprüche 1 bis 5 oder eine nach einem Verfahren gemäß Anspruch 7 oder Anspruch 8 gergestellte Kationenaustauschermembran einsetzt, wobei die modifizierte Oberflächenschicht der Anode zugewandt ist.

**Revendications**

1. Membrane échangeuse de cations formée d'un polymère fluoré pour électrolyse, ayant une structure qui comprend un copolymère d'une oléfine fluorée et d'un composé de fluorovinyle de formule

$$CF_2{=}CX{-}(OCF_2CFY)_l{-}(O)_m{-}(CFY')_n{-}COOM$$

dans laquelle X représente $-F$ ou $-CF_3$; Y et Y' représentent respectivement $-F$ ou un radical perfluoralkyle en $C_1-C_{10}$; l est de 0 à 3; m est 0 ou 1; n est de 0 à 12 et M représente un atome d'hydrogène ou un atome de métal alcalin, caractérisée en ce que ladit membrane échangeuse de cations présente une couche superficielle sur une face, modifiée par des groupes $-SO_3M$ formée par conversion des groupes $-COOM$, M étant tel que défini plus haut, cette couche superficielle ne s'étendant pas sur plus de 1/3 de l'épaisseur totale de la membrane.

2. Membrane échangeuse de cations selon la revendication 1 caractérisée en ce que ledit composé de fluorovinyle est un composé de formule

$$CF_2{=}CF{-}(OCF_2\underset{\displaystyle CF_3}{\underset{|}{C}}F)_p{-}O(CF_2)_q{-}COOM$$

dans laquelle p est 0 ou 1; q est de 1 à 5 et M représente un atome d'hydrogène ou un atome de métal alcalin.

3. Membrane échangeuse de cations selon la revendication 1 ou 2, caractérisée en ce que ladite membrane échangeuse de cations a une face anodique pourvue d'une couche superficielle modifiée comportant des groupes $-OCF_2SO_3M$ et une face cathodique pourvue d'une couche superficielle comportant des groupes $-OCF_2COOM$.

4. Membrane échangeuse de cations selon l'une quelconque des revendications précédentes, caractérisée en ce que la couche superficielle sur la face anodique porte des groupes $-SO_3M$ à titre de groupes échangeurs d'ions sur une profondeur d'au moins 1,0 microns.

5. Membrane échangeuse de cations selon l'une quelconque des revendications précédentes, caractérisée en ce que la capacité d'échange d'ions des groupes $-SO_3M$ dans ladite couche superficielle modifiée est dans l'intervalle allant de 1,0 à 4,0 méq./g de polymère sec.

6. Procédé de production d'une membrane échangeuse de cations en un polymère fluoré selon l'une quelconque des revendications 1 à 5, caractérisé en ce qu'on forme une membrane à partir d'un copolymère d'une oléfine

fluorée et d'un composé de fluorovinyle répondant à la formule:

$$CF_2{=}CX{-}(OCF_2CFY)_l{-}(O)_m{-}(CFY')_n{-}COOM$$

dans laquelle X représente —F ou —$CF_3$; Y et Y' représentent respectivement —F ou un radical perfluoralkyle en $C_1$—$C_{10}$; l est de 0 à 3; m est 0 ou 1; n est de 0 à 12 et M représente un atome d'hydrogène ou un atome alcalin et en ce que les groups de formule —COOM sur une face de la membrane sont convertis en groupes des formule —$SO_3M$, dans laquelle M est tel que défini plus haut.

7. Procédé selon la revendication 6, caractérisé en ce que les groupes —COOM sont convertis en groupes —$SO_3M$ en passant par des groupes intermédiaires de formule —$CF{=}CF_2$, —$CF_2H$ ou —$CF_2I$.

8. Procédé d'électrolyse d'une solution aqueuse d'un chlorure de métal alcalin pour produire un hydroxyde de métal alcalin et du chlore, caractérisé en ce qu'on utilise une membrane échangeuse de cations selon l'une quelconque des revendications 1 à 5, ou fabriquée par un procédé selon la revendication 7 ou 8, ladite couche superficielle modifiée étant en regard de l'anode.